(19) Europäisches Patentamt
European Patent Office
Office européen des brevets

(11) **EP 1 566 002 B1**

(12) **EUROPEAN PATENT SPECIFICATION**

(45) Date of publication and mention
of the grant of the patent:
**28.02.2007 Bulletin 2007/09**

(51) Int Cl.:
***H04B 10/18*** (2006.01)

(21) Application number: **02787873.5**

(86) International application number:
**PCT/EP2002/013514**

(22) Date of filing: **29.11.2002**

(87) International publication number:
**WO 2004/051893 (17.06.2004 Gazette 2004/25)**

(54) **OPTICAL COMMUNICATION SYSTEM**

OPTISCHES KOMMUNIKATIONSSYSTEM

SYSTEME DE COMMUNICATION OPTIQUE

(84) Designated Contracting States:
**AT BE BG CH CY CZ DE DK EE ES FI FR GB GR IE IT LI LU MC NL PT SE SK TR**

(43) Date of publication of application:
**24.08.2005 Bulletin 2005/34**

(73) Proprietor: **Pirelli & C. S.p.A.**
**20123 Milano (IT)**

(72) Inventors:
 • **MARAZZI, Lucia,**
 **c/o CORECOM**
 **Consorzio Ricerche**
 **I-20133 Milano (IT)**
 • **MARTINELLI, Mario,c/o CORECOM, Consorcio Ricerche**
 **I-20133 Milano (IT)**
 • **MELLONI, Andrea, c/o CORECOM, Consorzio Ricerche**
 **I-20133 Milano (IT)**
 • **PARADISO, Livio, c/o CORECOM, Consorzio Ricerche**
 **I-20133 Milano (IT)**
 • **PAROLARI, Paola, c/o CORECOM, Consorzio Ricerche**
 **I-20133 Milano (IT)**

(74) Representative: **Giannesi, Pier Giovanni**
 **Pirelli & C. S.p.A.,**
 **Viale Sarca, 222**
 **20126 Milan (IT)**

(56) References cited:
 **EP-A- 0 381 341         DE-C- 19 628 321**
 **US-A- 5 400 165**

 • TAKENOUCHI H ET AL: "AN OPTICAL PHASE-SHIFT KEYING DIRECT DETECTION RECEIVER USING A HIGH-RESOLUTION ARRAYED-WAVEGUIDE GRATING" OFC/IOOC '99 OPTICAL FIBER COMMUNICATION CONFERENCE / INTERNATIONAL CONFERENCE ON INTEGRATED OPTICS AND OPTICAL FIBER COMMUNICATION. SAN DIEGO, CA, FEB. 21 - 26, 1999, OPTICAL FIBER COMMUNICATION CONFERENCE / INTERNATIONAL CONFERENCE ON INTEGRATED OP, 21 February 1999 (1999-02-21), pages 213-215, XP001153084 ISBN: 0-7803-5430-3 cited in the application

**Description**

The present invention generally relates to the field of optical communication systems, such as, for example, wavelength division multiplexing (shortly, WDM) optical communication systems.

In the field of optical communications, a common technique adopted for transmitting information is intensity modulation of an optical carrier, typically generated by a laser source.

The advantage of this technique resides in the fact that modulating the intensity of an optical carrier, and extracting the information from the intensity-modulated optical carrier are relatively straightforward processes; in particular, the information can be extracted by means an intensity detector, such as a photodiode, with a direct detection approach.

Intensity-modulated optical signals are however highly sensitive to non-linear effects arising during the propagation of the signals in optical fibers. As a consequence, intensity-modulated optical signals are subject to a relatively high distortion during the propagation through an optical link from a transmitter section to a receiver section.

The distortions induced on intensity-modulated optical signals by non-linear effects in the optical communication links set a limit to the increase in the data transmission rate and, in WDM systems, to the density of WDM channels.

Therefore, in view of the constant market demand for increasing bandwidth, transmission methods other than intensity modulation have been and are being investigated.

Actually, in the early times of optical communications, transmission methods such as phase modulation were widely investigated, but in the context of a synchronous or coherent detection approach, according to which the information is retrieved by making a received signal beat with a local signal, generated by a local oscillator. However, coherent detection of phase-modulated signals poses several problems. For example, it is well known that in homodyne and heterodyne detection an optimum phase relation needs to be maintained between the local signal and the received signal. It is thus necessary to employ narrow-linewidth local oscillators and complicated phase-locked loops (PLLs), whose instabilities may easily cause detection errors. Additionally, due to the phase noise associated with optical signals, some requirements on the laser source linewidth or particular control techniques are needed to avoid bit error rate (BER) floors. Moreover, polarization problems may arise.

Direct detection of differential phase-shift keyed (D-PSK) signals has also been proposed, exploiting unbalanced interferometers. In this case however the problems of instability are merely transferred to the interferometer, and the laser source linewidth and frequency stability requirements are the same as in coherent detection.

US 4,817,207 describes an optical communication system in which phase modulation is superimposed on an amplitude-modulated light signal, and a coherent detection scheme is exploited.

The Applicant observes that also in this case the modulated signal, when propagated through an optical link, would be subject to distortions, due to the above-mentioned relatively high sensitivity of amplitude-modulated signals to fiber non-linear effects. Additionally, all the problems inherent to coherent detection are encountered.

In B. Wedding, "New Method for Optical Transmission Beyond Dispersion Limit", Electronics Letters, 2nd July 1992, Vol. 28, No. 14, pages 1298-1300, an optical signal transmission method is disclosed providing for generating a frequency-modulated optical signal by directly modulating the laser source; a dispersive fiber link (particularly a single-mode fiber) is exploited for converting the frequency modulation into an amplitude modulation..

The Applicant observes that generating the frequency-modulated signal by directly modulating the laser drive current induces noise, due to the associated amplitude modulation and residual chirps. Additionally, laser sources featuring a good, broad-band FM response are not easily found. Moreover, the problems of signal distortion induced by non-linear effects in the fibers are not overcome.

US 5,400,165 discloses an optical communication system based on dispersion induced FM to AM conversion with nonlinearity induced AM stabilization. The system utilizes a frequency modulated optical signal transmitter, a fiber span, an optical receiver which receives the transmitted optical signal and detects an AM signal resulting from dispersion-induced energy overlaps and voids in the optical signal, and one or more optical amplifiers spaced within the optical fiber span. Three-level detection is used in the receiver to detect the AM signal.

AU-B-13472/95 discloses an optical transmission method wherein a phase-modulated optical signal is generated using non-return to zero (NRZ) format, and propagated through a glass-fiber transmission path formed by standard single-mode fibers, along which the signal experience an amplitude modulation because of the group velocity dispersion of the transmission path. On the reception side, the signal is detected with respect to its amplitude modulation.

The Applicant observes that the problems of signal distortion due to non-linear effects in the fibers are not overcome. In addition to this, the use of NRZ format renders the signal detection relatively complicated, requiring two electrical (voltage) thresholds.

Y. Awaji et al., 'Error-free coherent detection of OC-192 phase-modulated data using Phase-to-Amplitude Conversion (PAC) based on optical injection locking', Optical Fiber Communication Conference 2001, Paper ThHl, propose a technique of optical phase detection based on phase-to-amplitude conversion through injection-locking of a laser.

The Applicant observes that this technique is limited by the laser cavity dynamics, which are complicated and not transparent to the signal bit rate.

US 4,983,024 discloses a method of optical phase to amplitude demodulation exploiting a non-linear Kerr medium.

The Applicant observes that the non-linear Kerr coefficient of the non-linear Kerr medium influences the conversion efficiency, while the Kerr medium response time determines the conversion speed. Moreover, induced bulk gratings have to be used.

In H. Takenouchi et al., "An optical phase-shift keying direct detection receiver using a high-resolution arrayed-waveguide grating", Optical Fiber Communication Conference 1999, Paper TuO4, pages 213-215, phase modulation to amplitude modulation conversion is obtained through an arrayed-waveguide grating (AWG).

The Applicant observes that this technique resembles, from a transfer function viewpoint, the technique exploiting unbalanced interferometers. The Applicant also observes that this technique suffers of several drawbacks. In particular, the level of compensation of dispersion through the optical link can severely affect the receiver efficiency: chromatic dispersion, in combination with modulation instability and self phase modulation, can considerably alter the spectrum of the input signal, distorting the converted signal. Moreover, additional components such as low-pass electric filters and optical spatial filters are necessary, whose phase error tolerance greatly affects the phase modulation to amplitude modulation conversion. In view of the state of the art outlined, it has been an object of the present invention to provide a new optical communication system and method.

EP 381,341 discloses a Frequency Shift Keying (FSK) optical communication system. A light source is frequency modulated by direct current modulation with no pre-equalization or pre-distortion of the signal, and the optical signal is coupled to and carried by an optical fiber to a remote location. At the remote location, an optical discriminator such as a fiber Fabry-Perot interferometer can be used for both channel selection where more than one channel is being carried by the optical fiber and for converting the frequency modulation signal of each channel to an amplitude modulated signal. The amplitude modulated signal can be detected by a direct detection receiver.

DE 196,28,321-C1 discloses a process for multiplexing two subcarriers of an optical or microwave carrier with the same or substantially the same frequency. The method involves modulating the carrier with the subcarriers at the input end. In this way an intensity and a phase modulated signal are transmitted simultaneously over the transmission path. At the output side, the signal is converted for maximum detectability for each receiver type. The signal processing and conversion are performed using dispersion elements which convert the phase modulation into intensity modulation, or vice-versa.

Throughout the present description and claims the expressions "substantially constant optical power" and "almost constant optical power" are used interchangeably to refer to a power of an optical signal which is substantially constant at a given link position during a time of the order of the bit period. Preferably this corresponds to a condition wherein the propagating optical signal has, at a given link position, power fluctuations over the bit period of less than -8 dB. More preferably, power fluctuations over the bit period are of less than -12 dB.

The Applicant has found that by combining phase modulation as a means of encoding information onto optical signals together with transmission of the optical signals at substantially constant optical power along a dispersion managed optical link, a simple and effective detection of the signals at the end of the link is made possible by a concentrated dispersion localized at the receiver.

According to a first aspect of the present invention, an optical communication system as set forth in appended claim 1 is provided.

Briefly stated, the optical communication system comprises:

a transmitter for generating a phase-modulated optical signal;
a receiver for receiving the phase-modulated optical signal, and
an optical communication link between the transmitter and the receiver.

The optical communication link is a dispersion-managed optical communication link comprising dispersion-compensating elements, propagating the phase-modulated optical signal at substantially constant optical power.

The receiver comprises a dispersive element having a prescribed dispersion, the dispersive element receiving and converting the phase-modulated optical signal into a corresponding intensity-modulated optical signal, and an optical intensity detector fed with the intensity-modulated optical signal.

In particular, the transmitter comprises an optical carrier source generating an optical carrier, and a phase modulator driven by a modulating signal, for imparting to the optical carrier a phase modulation.

In an embodiment of the present invention, the optical carrier source comprises a laser. In an embodiment of the present invention, the phase modulator comprises a LiNbO3 modulator.

Preferably, the modulating signal is coded in a return-to-zero format.

In an embodiment of the present invention, the receiver comprises an optical power splitter, a first and a second dispersive elements with mutually opposite dispersion fed by the power splitter, a first and a second optical intensity detectors respectively fed by the first and second dispersive elements and generating a first and a second electrical signals, and a subtractor (605) for subtracting the first electrical signal from the second electrical signal.

The dispersive element comprises a dispersion-compensating optical device, such as an optical fiber section or a fiber Bragg grating.

The optical communication link comprises at least one optical communication link section, comprising a dispersion-compensated optical fiber span and an optical amplifier.

The dispersion-compensated optical fiber span preferably comprises one among a step-index optical fiber or a non-zero dispersion-shifted optical fiber. The dispersion-compensated optical fiber span preferably includes fiber with a dispersion greater than 1 ps/nm km in absolute value. Less preferably, a dispersion shifted fiber is used within the dispersion compensated optical fiber span.

The dispersion-compensated optical fiber span comprises at least one dispersion-compensating element, such as a dispersion-compensating optical fiber, a transmission fiber or a fiber Bragg grating.

The optical amplifier may for example be an erbium-doped fiber amplifier, a semiconductor optical amplifier, an optical parametric amplifier or a Raman optical amplifier. Other optical amplifying devices can be exploited.

In the context of WDM communication, the transmitter comprises at least two transmitter units, each one generating a respective phase-modulated optical signal; the phase-modulated optical signals generated by different transmitter units are differentiated by wavelength, and a wavelength multiplexer receives the phase-modulated optical signals generated by different transmitter units and generates a wavelength division multiplexed optical signal. The receiver comprises a wavelength demultiplexer receiving and demultiplexing the wavelength division multiplexed optical signal.

The dispersive element may be placed upstream the wavelength demultiplexer in the light propagation direction, or downstream the wavelength demultiplexer; in the latter case, the receiver comprises at least two receiver units, each one comprising a respective dispersive element downstream the wavelength demultiplexer in the light propagation direction.

According to another aspect of the invention, there is provided a method of optically transmitting information.

Briefly stated, the method comprises:

    generating a phase-modulated optical carrier according to the information to be transmitted;
    propagating the phase-modulated optical carrier through an optical link;
    receiving and demodulating the phase-modulated optical carrier.

Said propagating the phase-modulated optical carrier comprises managing a dispersion of the optical link to keep almost constant an optical power of the phase-modulated optical carrier.

Said receiving and demodulating the phase-modulated optical carrier comprises converting the phase-modulated optical carrier into a corresponding intensity-modulated optical carrier by subjecting the phase-modulated optical carrier to a preselected dispersion, and demodulating the intensity-modulated optical carrier.

The features and advantages of the present invention will be made apparent by the following detailed description of some embodiments thereof, provided merely by way of non-limitative examples, which will be made in connection with the attached drawing sheets, wherein:

    FIG. 1 schematically shows an optical communication system according to an embodiment of the present invention;
    FIG. 2 shows examples of phase-modulation signals used in the optical communication system of FIG. 1;
    FIG. 3 is a diagram showing the results of simulations conducted by the Applicant;
    FIG. 4 schematically shows an optical transmission link section according to an alternative embodiment of the present invention;
    FIG. 5 schematically shows a portion of an optical communication system according to an alternative embodiment of the present invention;
    FIG. 6 schematically shows a receiver unit according to an alternative embodiment of the present invention;
    FIG. 7 shows the eye diagram of a received signal in a simulation conducted by the Applicant;
    FIG. 8 schematically shows an experimental set-up used for testing the optical communication system of FIG. 1;
    FIG. 9 shows, in term of an eye diagram, the results of the experiments conducted on the set-up of FIG. 9;
    FIG. 10 schematically shows another experimental set-up, used for bit error rate measures;
    FIG. 11 shows the measured bit error rate, compared to a simulated bit error rate;
    FIG. 12 shows the Q factor in dB units against dispersion at the receiver in a further simulation conducted by Applicant with a signal input power of 10 dBm; and
    FIG. 13 shows the Q factor in dB units against dispersion at the receiver in a further simulation conducted by Applicant with a signal input power of 13 dBm.

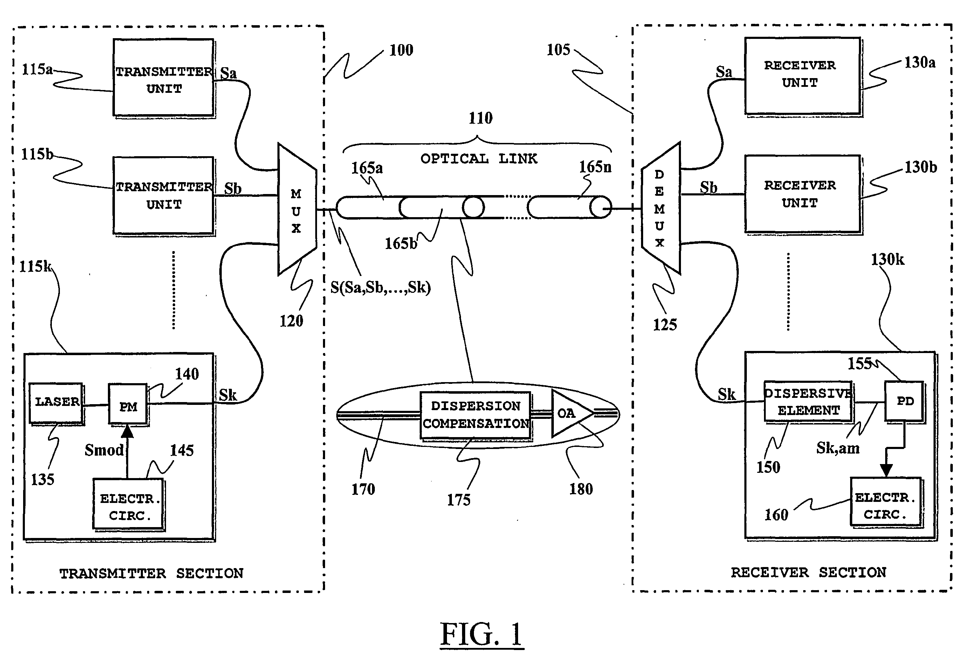

Making reference to the drawings, in FIG. 1 an optical communication system according to an embodiment of the present invention is schematically depicted. The system comprises a transmitter section 100, a receiver section 105 and an optical communication link 110 connecting the transmitter section 100 to the receiver section 105.

In the exemplary embodiment of the invention described herein, the optical communication system is a wavelength division multiplexing (WDM) optical communication system, in which a plurality (two or more) of independent optical signals, differentiated by wavelengths, are multiplexed in the optical wavelength domain and sent along the same optical communication link. In particular, specific wavelength bands of predetermined width centered on respective central wavelengths, also referred to as channels, are assigned to each of the signals at different wavelengths. Typical values of spectral separation between adjacent channels are of about 1.6 nm or 0.8 nm for the so-called Dense WDM (shortly, DWDM), and 20 nm for Coarse WDM (CWDM - ITU Recommendation No. G.694.2).

The transmitter section 100 includes a plurality of transmitter units 115a, 115b,..., 115k, each one associated with a respective WDM channel. Each transmitter unit 115a, 115b,..., 115k generates a respective optical signal Sa, Sb,..., Sk in a respective channel of central wavelength $\lambda a$, $\lambda b$,..., $\lambda k$.

The different optical signals Sa, Sb,..., Sk are fed to an optical multiplexer 120, for example comprising optical couplers, optical add/drop multiplexing devices (OADMs), arrayed-waveguide gratings (AWGs). The multiplexer 120 multiplexes the different optical signals Sa, Sb,..., Sk in the wavelength domain, generating a multiplexed optical signal S(Sa,Sb,...,Sk), and sends the multiplexed optical signal S(Sa,Sb,...,Sk) over the optical communication link 110. The multiplexed optical signal S(Sa,Sb,...,Sk) propagates through the optical communication link 110 to the receiver section 105.

In the receiver section 105, the multiplexed optical signal S(Sa,Sb,...,Sk) is fed to an optical demultiplexer 125, for example comprising optical filters, OADMs or AWGs. The different signals Sa, Sb,..., Sk are thus extracted from the multiplexed signal S(Sa,Sb,...,Sk), and fed to respective receiver units 130a, 130b,..., 130k. Each receiver unit 130a, 130b,..., 130k processes the respective optical signal, for example converting it into an electrical signal.

It is pointed out that the number of WDM channels, and thus the number of transmitter units and receiver units in the transmitter section and receiver section, may vary from as few as one channel to a very large number of channels, e.g. 80 or even 240 channels, depending on the specific application.

FIG. 1 also schematically shows the structure of the transmitter units, the optical communication link and the receiver units, in an embodiment of the present invention.

Each transmitter unit 115a, 115b,..., 115k comprises a laser source 135. The laser source 135 may be fixed or tunable in wavelength, and is for example a laser diode for telecommunication applications, with linewidth typically ranging from 100KHz to 10 MHz. The laser source 135 generates an optical carrier at the prescribed wavelength $\lambda a$, $\lambda b$,..., $\lambda k$. The optical carrier is fed to a phase modulator 140, for example an electrooptic phase modulator such as a $LiNbO_3$ phase modulator, driven by a modulating electrical signal Smod generated by an electronic circuitry 145. The phase modulator 140 modulates the optical carrier phase according to the modulating signal Smod, carrying the information to be transmitted, thereby producing the phase-modulated optical signal Sa, Sb,..., Sk. According to an embodiment of the present invention, the modulating electrical signal Smod is a return-to-zero (RZ) coded signal.

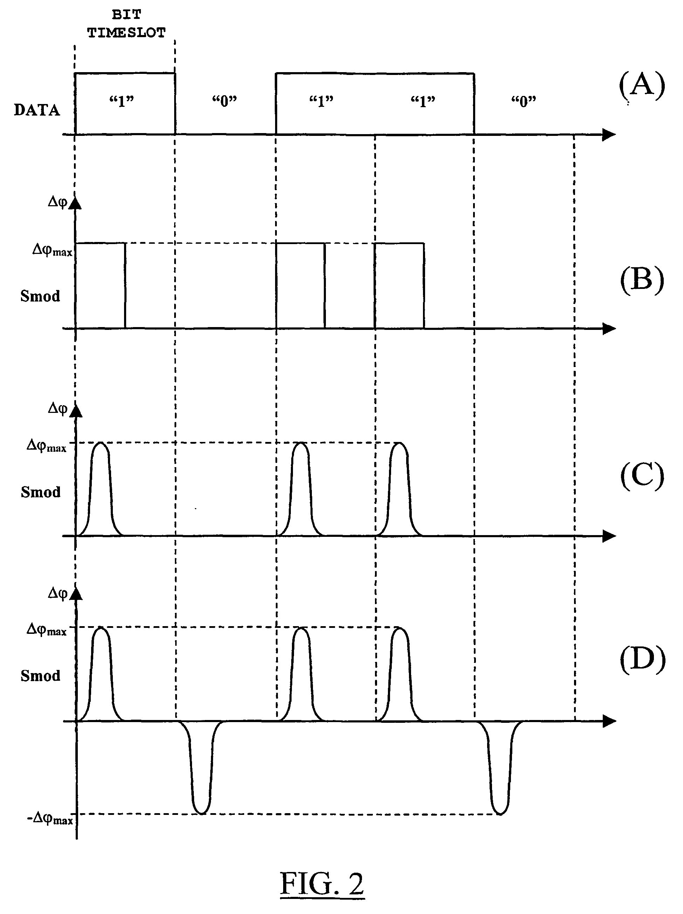

In particular, the modulating electrical signal Smod comprises phase modulation pulses. The phase modulation pulses can be for example rectangular, gaussian or supergaussian in shape. Referring to FIG. 2 (A), (B) and (C), a sequence of rectangular (FIG. 2 (B)) and gaussian (FIG. 2 (C)) RZ-coded phase modulation pulses is shown for an exemplary data stream (FIG. 2 (A)). $\Delta\varphi$ indicates the instantaneous phase deviation imparted to the optical carrier, and $\Delta\varphi$max is the maximum phase shift or phase modulation depth. The phase modulation pulses time duration and repetition rate depends on the desired bit rate. Concerning the phase modulation depth, albeit no theoretical limits exist, it is advisable that the maximum phase shift be not too high, so as to limit the modulated signal bandwidth; practical considerations suggest that the phase modulation depth should be not higher than $\pi$.

Optionally, a variable optical attenuator (VOA) or similar device, not shown in the drawings, is provided at the output of the phase modulator 140, so as to equalize the power of the different WDM channels or give them a preselected preemphasis.

The optical communication link 110 is designed in such a way that, at the receiver section end, the optical signals Sa, Sb,..., Sk have substantially the same phase as the corresponding signals at the transmitter section end. A more detailed description of the optical communication link structure is provided later on.

Each receiver unit 130a, 130b,..., 130k comprises a dispersive element 150 designed to introduce a prescribed degree of dispersion. The dispersive element 150 converts the incoming phase-modulated optical signal Sa, Sb,..., Sk into a corresponding amplitude-modulated (and, hence, intensity modulated) optical signal (in FIG. 1, reference numeral Sk,am is used to denote the amplitude-modulated optical signal corresponding to the phase-modulated optical signal Sk). The dispersive element 150 can for example be a discrete component, such as a fiber Bragg grating (FBG), or an optical fiber span.

The phase- to intensity-modulation conversion taking place in the dispersive element 150 will be now discussed considering by way of example the case of an optical fiber span. Neglecting non-linear effects and losses within the fiber, the optical fiber transfer function H(ω) can be approximated by the following expression:

$$H(\omega) = e^{-j\beta(\omega)z}$$

where β(ω) is the propagation constant and z is the length of the optical fiber span. Expanding the propagation constant β(ω) in base band, the following expression can be derived:

$$H'(\omega) = e^{-j\beta_2(\omega^2/2)}dz$$

which, for small values of $\beta_2\omega^2$, can be approximated by

$$H'(\omega) \approx 1 - j\beta_2(\omega^2/2)dz.$$

Thus, after propagation through a small section of length dz of the optical fiber, the output field module of an incoming phase-modulated signal is, in the frequency domain,

$$S(\omega)_{out} \approx S(\omega)_{in} - S(\omega)_{in}\, j\beta_2(\omega^2/2)dz$$

In the time domain, neglecting second-order terms, it is:

$$s_{out}(t) \approx s_{in}(t)[1 - j(\beta_2/2)\varphi''(t)dz] \qquad (1)$$

where φ''(t) is the second-order time derivative of the modulated phase.
Since the optical fiber dispersion is defined as

$$D = -(2\pi c/\lambda^2)\beta_2$$

it can be appreciated that the optical fiber dispersion causes a phase to amplitude conversion.
Similar considerations apply in the case the dispersive element comprises a FBG, or any other dispersive component adapted to introduce a prescribed amount of dispersion.
The intensity-modulated optical signal exiting from the dispersive module 150 is fed to an element 155 sensitive to the light intensity, such as a photodetector 155. The photodetector 155 converts the optical signal into an electrical signal, which is fed to and processed by an electronic circuitry 160. The photodetector 155 can for example comprise a photodiode with suitable bandwidth, possibly followed by an element, e.g. a bias-tee, capable of suppressing the DC component corresponding to the mean transmitted optical power.
It is observed that employing RZ-coded phase modulating signals, the electronic circuitry processing the received signals may exploit a simple direct-detection apparatus, using a single voltage threshold.
From a practical viewpoint, using an optical fiber span as a dispersive element may be preferred to using a FBG, because the dispersion value remains constant for most of the third telecommunication window (1550 nm), while FBGs are normally designed for relatively small bandwidths around a certain central frequency. In particular, a positive dispersive element can be realized by means of a single-mode (SM) fiber spool, with typical dispersion D of 17 ps/nm km; a negative dispersive element can be realized by means of a Dispersion Compensating Fiber (DCF) spool, with typical dispersion D of -75 ps/nm km). A drawback of using optical fibers as dispersive elements resides in the fact that when long spools of fibers are needed, non-linear effects within the fibers cannot be neglected.

The dispersive element 150 is designed to obtain intensity-modulated signals of sufficient intensity; to this purpose, the shape, time duration and modulation depth of the phase-modulation pulses need to be considered. Specifically, since the conversion from phase modulation to intensity modulation takes place through the second-order time derivative of the phase, different phase modulation pulse shapes and rising times give rise to different eye diagrams, and optimized dispersive elements need to be slightly different from each other.

Considering for example the case of gaussian phase modulation pulses, from equation (1) reported above, the maximum phase to intensity modulation conversion results to be:

$$(p \cdot |\beta_2| \cdot L)/\tau_0^2$$

where p is the phase modulation depth, $\tau_0$ is the pulse time duration and L is the length of the fiber span constituting the dispersive element. If this value is less than approximately 0.5, dispersion-induced phase modulation to intensity modulation conversion produces substantially undistorted intensity-modulated pulses. Numerical optimization techniques or simulations can be used, starting form a value of $|\beta_2|L$ of the order of $\tau_0^2/p$. The same formula can be exploited as a first approximation in the case of phase modulation pulses of different shapes.

The phase modulation depth is an additional system design parameter to be considered when optimizing the dispersive element: in fact, by changing the phase modulation depth, the signal Carson bandwidth can be changed. It has already been observed that in order to limit the bandwidth of the modulated signal, the phase modulation depth should be low; if the modulation depth is less than $\pi/2$, the bandwidth of the phase-modulated signal is comparable to the signal bandwidth in systems relying on intensity modulation of the optical carrier. However, in order to keep the necessary amount of dispersion reasonably low, a relatively high phase modulation depth should be envisaged. In order to balance these opposite requirements, the phase modulation depth should be in the range $\pi/20$ to $\pi$; in particular, a modulation depth of $\pi/2$ is a good trade off among signal bandwidth, penalties due to non-linear effects during propagation and efficient phase-modulation to intensity-modulation conversion.

The optical communication link 110 comprises one or more optical link sections 165a, 165b,..., 165n, in a cascaded arrangement. Each optical link section 165a, 165b,..., 165n comprises an optical fiber span 170, a dispersion compensation element 175, in the shown example placed at the end of the fiber span 170 in the light propagation direction, and an optical amplifier 180.

The optical fiber can be a step-index fiber or a non-zero dispersion-shifted (NZDS) fiber, less preferably a dispersion-shifted (DS) fiber. The dispersion of the optical fiber is preferably greater than 1 ps/nm km in absolute value. The length of the fiber span and the number of optical link sections may be tailored on the system needs, and depend for example on the distance between the transmitter section and the receiver section; optical fiber spans of the order of tens of kilometers are typical.

The dispersion compensation element 175 can comprise fiber Bragg gratings (FBGs), dispersion compensating fibers (DCFs), transmission fibers having suitable dispersion and length, holey fiber-based devices or any other dispersion-compensating component.

The optical amplifier 180 may be an erbium-doped fiber amplifier (EDFA), a semiconductor optical amplifier (SOA), an optical parametric amplifier (OPA), a Raman amplifier or any other suitable optical amplifying component.

As known, an optical signal propagating through an optical fiber is subject to distortions due to losses, chromatic dispersion and non-linear effects (e.g., the Kerr effect).

Losses in the optical fiber cause an attenuation of the propagating signal. This effect can be compensated by means of the optical amplifier 180, by tailoring the gain thereof.

Chromatic dispersion causes the phase modulation imparted to the optical carrier to be converted into an intensity modulation, as discussed above in connection with the dispersive element 150 in the receiver units 130a, 130b,..., 130k. In the hypothesis of linear propagation of the signal through the fiber (i.e., in absence of non-linear effects), the effect of chromatic dispersion can be fully compensated by placing, at the end of an optical fiber span, a dispersion compensating element that introduces a dispersion equal and opposite to the dispersion introduced by the optical fiber span; by means of this technique, also referred to as exact or perfect compensation, the original phase modulation and amplitude of the optical signals can in principle be restored.

However, due to non-linear effects, and particularly the Kerr effect, perfect compensation of the dispersion introduced by the optical fiber span does not allow restoring the original phase and amplitude of the signal, and a residual intensity modulation exists.

According to an embodiment of the present invention, the optical communication link 110 is a quasi-linear dispersion-compensated optical link, in which dispersion management is implemented for compensating the chromatic dispersion and also the phase modulation to intensity modulation distortion (residual intensity modulation) induced by non-linear effects, so that the optical power is substantially constant over the link.

In the context of the present description, dispersion management means a dispersion compensation technique that does not merely aim at compensating the effects of chromatic dispersion, but that is devised to compensate also the distortion induced by non-linear effects. Dispersion compensation techniques other than perfect compensation may have to be considered, for example under-compensation (a dispersion compensation technique in which the dispersion compensation element compensates less than the overall chromatic dispersion introduced by the optical fiber span) or combined dispersion management, a technique combining pre-compensation and post-compensation for the optical fiber span, so that the overall dispersion compensation value is the opposite of the optical fiber span dispersion.

The specific type of dispersion compensation technique varies depending on several factors, such as the length of the optical fiber span.

From a practical viewpoint, the preferred dispersion compensation technique to be applied can be determined in the following way. Exploiting the residual intensity modulation of an optical signal at the end of an optical communication link section to provide a measure of the distortion induced by the Kerr effect, an index of distortion (ID) can be defined. In particular, the index of distortion ID is defined as the integral over a bit time of the square modulus of the residual intensity modulation:

$$ID = \int_{bit\_time} |R|^2 = \int_{bit\_time} \left| \frac{opt\_fld_{linear} - opt\_fld_{nonlinear}}{opt\_fld} \right|^2$$

where R is the difference, normalized to the average field, between a signal opt-fld$_{linear}$ propagating in a virtually linear regime and a signal opt-fld$_{nonlinear}$ propagating in the actual non-linear regime. In other words, the index of distortion ID represents a measure of distortion versus the total bit energy. Given an optical fiber span length and a specific type of optical fiber, different dispersion compensation techniques can then be experimented, to reduce or minimize the index of distortion ID.

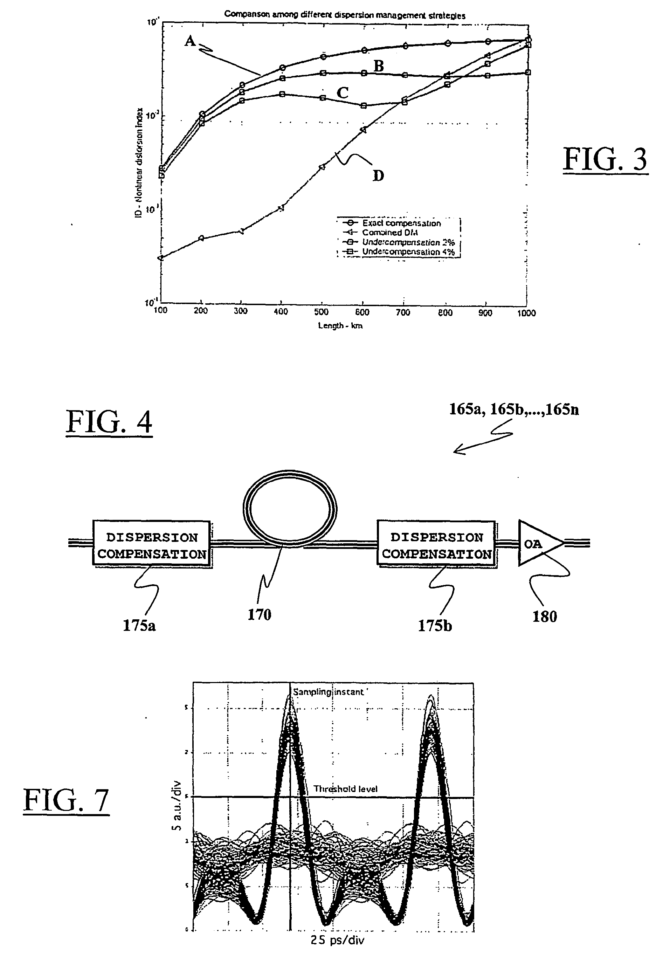

The diagram in FIG. 3 shows the results of simulations conducted by the Applicant on a multi-span optical communication system of the type depicted in FIG. 1, with spans of 100 Km each of NZDS optical fiber having an overall dispersion ($\beta_2 L$) of 200 ps$^2$, operated at 10 Gbit/s bit rate and with a phase modulation depth of $\pi/2$. Four different dispersion compensation techniques were experimented, namely exact compensation, 2% under-compensation, 4% under-compensation and combined dispersion management techniques. It can be seen that the optimum dispersion compensation technique depends on the overall length of the optical communication link, i.e., on the number of spans, although even with a simple exact post-compensation technique (curve A) the index of distortion remains below 0.1. In particular, the simulations evidenced that in the case of a long-haul system, e.g., of a length exceeding 600 km (for example, a submarine optical communication system), the better performance is achieved by means of a low, post under-compensation technique, in which the compensation dispersion element 160, placed at the end of the optical fiber span, compensates slightly less than the overall dispersion introduced by the optical fiber span (5% or less under-compensation, curves B and C); in the case of optical communication systems of less than 600 Km (typical terrestrial systems), curve D shows that the performance increases using a combined dispersion management scheme of the type depicted in FIG. 4, in which exact compensation is performed for each span by means of pre- and post-compensation elements 175a, 175b.

Other compensation techniques can be exploited, for example providing for a pre-compensation at the beginning of the optical communication link 110, and in-line compensation within each optical communication link section 165a, 165b,..., 165n.

Similar considerations can be made for different types of optical fibers. In general, an optimum dispersion compensation technique can be found, also by means of simulations or experiments, which minimizes the index of distortion, and thus the phase to intensity modulation conversion induced by non-linear effects. In the practice, in long haul (typically, submarine) transmission links some percent of distortion (a value of the index of distortion ID of about 0.05) is preferred, whereas for medium or short-haul (typically, terrestrial) systems an ID value of less than 0.1 can be tolerated.

It is observed that, in case of a multi-span optical communication system, the dispersion compensation is preferably (although not necessarily) made at each span, since it can more easily be optimized depending on the span length, the nature of the optical communication system (submarine or terrestrial) and of the optical signal power.

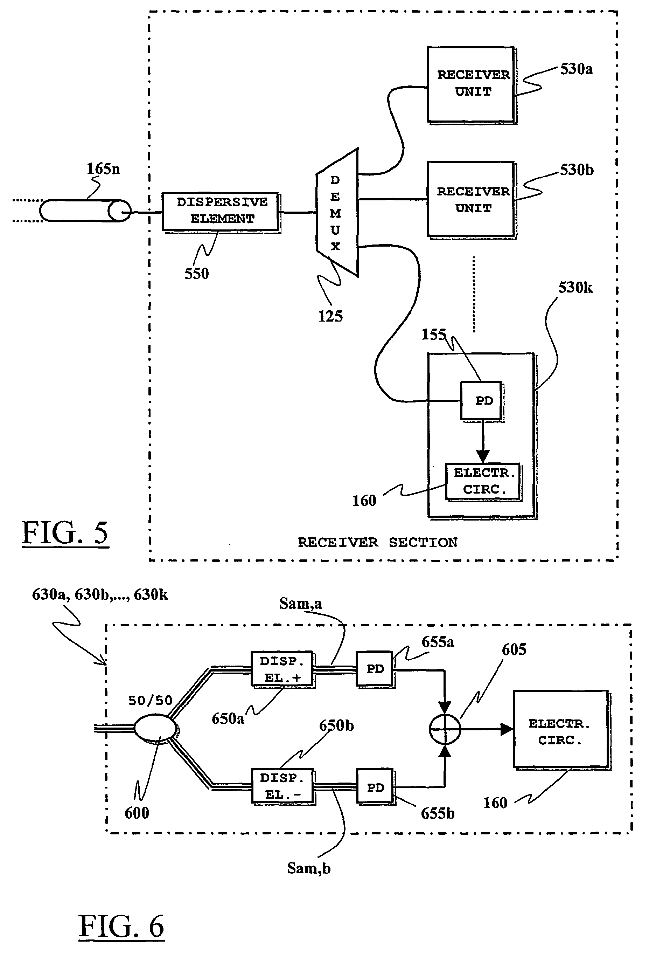

FIG. 5 schematically shows an optical communication system according to an alternative embodiment of the present invention. Differently from the previous embodiment, the dispersive element is not provided in each receiver unit. A single dispersive element 550 is provided, upstream the optical demultiplexer 125, for performing the phase to intensity modulation conversion, and the receiver units just include the photodetector 155 for converting the intensity modulated signal into an electrical signal, and the electronic circuitry 160 for processing the electrical signal. In this case, the dispersive element 550 needs to be optimized considering all the WDM channels, and not just a single channel as in the previous embodiment. In particular, the utilization of an optical fiber section as a dispersive element is preferred, thanks to the relatively wide compensation band, compared to currently-available FBGs; in the latter case, a preliminary division of the WDM signal S(Sa, Sb,..., Sk) into groups of adjacent channels can be envisaged, accomplished for example by means of interleavers, and a number of FBG dispersive elements can be provided, one for each group of WDM channels.

The embodiment of FIG. 5 allows reducing the number of dispersive elements.

Referring to FIG. 6, a receiver unit 630a, 630b, 630k according to an alternative embodiment of the present invention is schematically shown. In particular, the receiver unit 630a, 630b,..., 630k is a differential receiver unit. The incoming signal Sa, Sb,..., Sk is fed to a 50/50 optical coupler 600 or similar element, splitting the signal Sa, Sb,..., Sk into two half-power signals. The two half-power signals are fed to a positive dispersive element 650a and to a negative dispersive element 650b. The positive dispersive element introduces a positive dispersion, and converts the respective phase-modulated half power signal into a first intensity-modulated signal Sam,a while the negative dispersive element introduces a negative dispersion and converts the respective phase-modulated signal into a second intensity-modulated signal Sam,b. The signals Sam, a and Sam,b are fed to respective photodetectors 655a, 655b, and the resulting electrical signals are subtracted by a subtractor 605. The electrical signal resulting from the subtraction is fed to the electronic circuitry 160. This allows increasing the eye opening of the received signal, reducing the DC component almost to zero, and increasing the common-mode noise rejection.

In a still alternative embodiment, the modulating signal Smod is coded in antipodal RZ format, with logic "1" data corresponding to a positive phase shift, for example $\pi/2$, and logic "0" data corresponding to a negative phase shift, for example $-\pi/2$; this is for example shown in FIG. 2 (D) in connection with gaussian-shaped phase modulation pulses. The receiver units 130a, 130b,..., 130k comprise a negative dispersive element 150, introducing a prescribed negative dispersion. This solution allows increasing the eye opening of the received signal, and still requires a single photodetector 155.

## Experimental work

The Applicant conducted experiments and simulations to characterize the behavior of the optical communication system in different conditions.

In particular, a WDM, long-haul optical communication system was simulated. The simulated system comprised eight WDM channels in the window centered on 1550 nm, with a channel spacing of 100 GHz. Eight DFB lasers with 2 MHz linewidth were used. Eight optical carriers generated by 0 dBm lasers were modulated by 10 Gbit/s RZ rectangular pulses of $(4/5)\pi$ modulation depth.

The optical communication link was 800 km long, and composed of eight sections of 100 km each. The optical fibers were NZDS, with dispersion D = -1.6 $ps^2$/km at a wavelength of 1550 nm, core area equal to 60 $\mu m^2$ and $\lambda0$ equal to 1563 nm. A pre-compensation element of total dispersion of 150 $ps^2$ was provided at the beginning of the link, together with an in-line compensation of -250 $ps^2$ before each optical amplifier. EDFA optical amplifiers were used, each having a gain of 20 dB, equal to the fiber span losses, and NF equal to 5 dB, except the last, which had NF of 4 dB.

The receiver units had a dispersive element introducing a 300 $ps^2$ dispersion. The photodetectors were PIN photodiodes, with a responsivity of 0.87 A/W, and dark current of 0.1 nA.

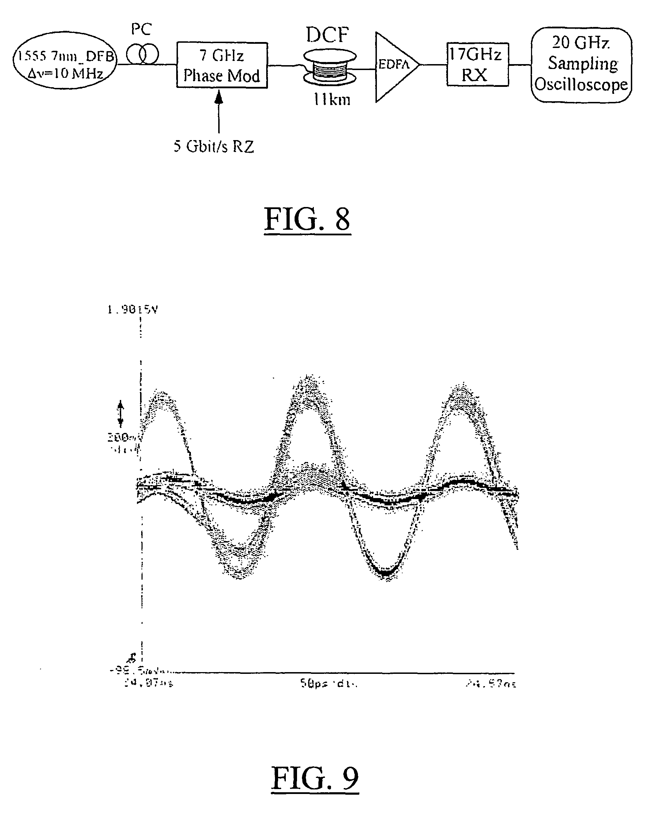

FIG. 7 shows the eye diagram of the received signal for the worst of the eight channels.

This simulation showed that the Q (linear) factor is of about 6.16. Hence the simulation shows that the Q (linear) factor is higher than 6 (corresponding to the error free condition of BER lower than $10^{-9}$) for all 8 channels.

The Applicant also conducted experimental trials.

In particular, using the experimental set-up schematically shown in FIG. 8, the transmitter and receiver sections were tested. The transmitter section comprised a typical telecommunication DFB laser with 10 MHz FWHM linewidth at 1555.7 nm, and a Ramar phase modulator with a bandwidth of 7 GHz; a 5 Gbit/s RZ modulation was used, with rectangular modulation pulses with a modulation depth of $\pi/8$. Field transmission was optimized using polarization controllers (PC). The modulated signal was fed to a 11 Km, dispersion-compensating optical fiber (DCF) module with dispersion D = -75 ps/nm km, for a total $\beta_2 L$ of 1070 $ps^2$. The phase-modulated signal propagating through the DCF module was converted into an intensity-modulated signal. A 17 GHz receiver was used, followed by an EDFA for preamplifying the signal. FIG. 9 shows the eye diagram displayed on a 20 GHz bandwidth sampling oscilloscope connected to the receiver.

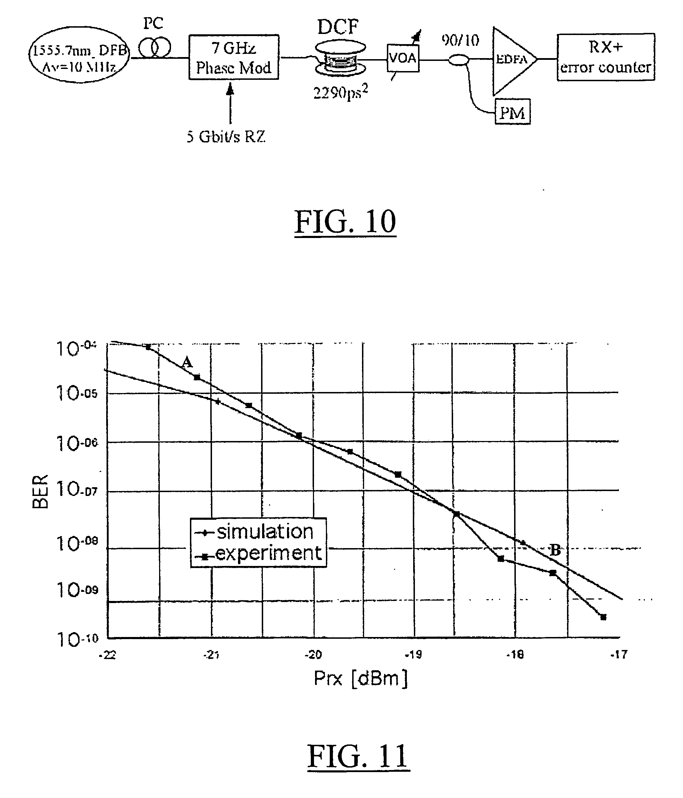

Another experiment conducted by the Applicant was intended to provide a measure of the BER. The experimental set-up is schematically shown in FIG. 10. A typical telecommunication DFB laser with 10 MHz FWHM linewidth at 1555.7 nm was used as a source, and the generated carrier was phase-modulated at 5 Gbit/s, in RZ format with rectangular pulses, by means of a 7 GHz bandwidth Ramar phase modulator, optimizing field transmission through polarization controllers, and giving a modulation depth of $\pi/8$. The phase-modulated signal was then fed to three cascaded DCF modules, with total $\beta_2 L$ of 2290 $ps^2$. An EDFA (NF = 4 dB) was used as a pre-amplifier, the input power in the DCF modules was kept constant (within 3 dBm), whereas the received power was varied by means of a variable optical attenuator (VOA). FIG. 11 is a diagram showing the obtained BER curve (curve A) as a function of the received power; curve B shows instead the simulated BER curve: good agreement is found between the simulated BER curve and the experimental one. A Q (linear) factor of 7.34 was obtained using the Bergano et al. technique (described in N.S. Bergano, F.W. Kerfoot, C.R. Davidson, "Margin measurement in optical amplifier systems" Photon. Technol. Lett. vol. 5, no. 3, pp. 304-ff., 1993) for a received power of -16 dBm.

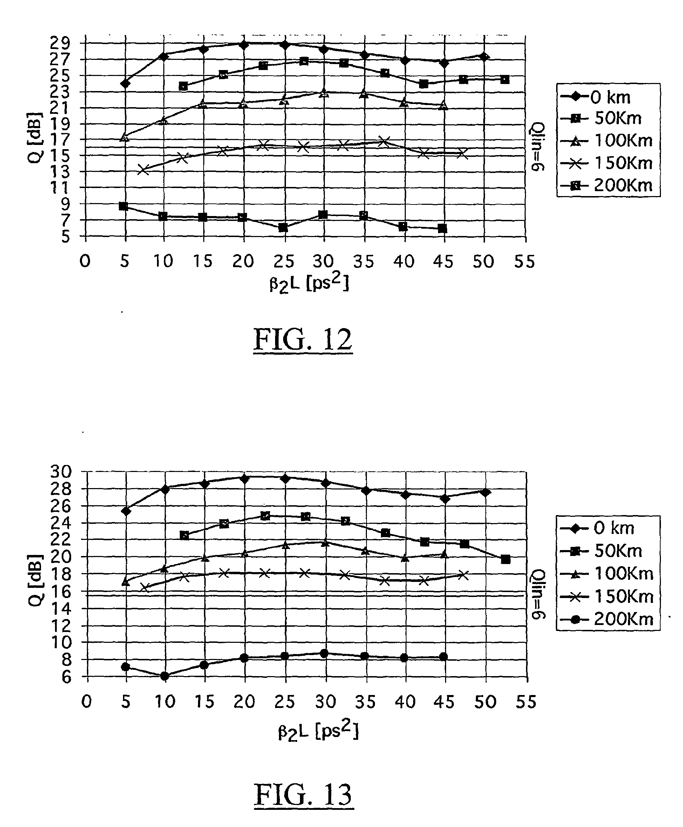

In a further simulation conducted by Applicant, a single-section optical link was tested for transmission at 40 Gbit/s with RZ format. The link section included a span of fiber with $\beta_2$=-1.54 ps$^2$/km at 1550 nm, $\lambda_0$=1523 nm and effective area of 60$\mu$m$^2$, and a dispersion compensation element at the end of the fiber span to exactly compensate the dispersion of the fiber span. The simulation set-up included a dispersion element at the end of the link, before the receiver. The dispersion of the dispersion element was set at different values, in the range 5 - 52 ps$^2$. The transmitted 40 Gbit/s signal included 10 ps pulses of gaussian shape at 1550 nm, phase modulated with a modulation depth of $\pi$/2. In two series of simulations, whose results are shown respectively in FIG. 12 and FIG. 13, the optical power transmitted at the input of the link was set at 10 dBm and 13 dBm, respectively. In each of FIG. 12 and FIG. 13 the Q factor (in dB units) is shown as a function of the dispersion of the dispersion element before the receiver. A continuous horizontal line shows, in both graphs, the Q factor in dB units corresponding to a linear Q factor of 6. As shown in the graphs, long span lengths (of at least 100 km or longer) can be reached at 40 Gbit/s with a linear Q factor higher than 6 (BER lower than 10$^{-9}$).

## Claims

1. An optical communication system, comprising:

   a transmitter (100) for generating a phase-modulated optical signal (Sa, Sb,..., Sk) ;
   a receiver (105) for receiving the phase-modulated optical signal;
   an optical communication link (110) between the transmitter section and the receiver section, **characterized in that**:

   the optical communication link is a dispersion-managed optical communication link comprising dispersion-compensating elements (175;175a,175b), propagating the phase-modulated optical signal at substantially constant optical power, and **in that**
   the receiver comprises a dispersive element (150;550;650a,650b) having a prescribed dispersion, the dispersive element receiving and converting the phase-modulated optical signal into a corresponding intensity-modulated optical signal, and an optical intensity detector (155;655a,655b) fed with the intensity-modulated optical signal.

2. The optical communication system of claim 1, in which the transmitter comprises an optical carrier source (135) generating an optical carrier, and a phase modulator (140) driven by a modulating signal (Smod), for imparting to the optical carrier a phase modulation.

3. The optical communication system according to claim 2, in which the optical carrier source comprises a laser, and the phase modulator comprises a LiNbO$_3$ modulator.

4. The optical communication system of claim 2 or 3, in which the modulating signal is coded in a return-to-zero format.

5. The optical communication system of any one of the preceding claims, in which the receiver comprises an optical power splitter (600), a first and a second dispersive elements (650a,650b) with mutually opposite dispersion fed by the power splitter, a first and a second optical intensity detectors (655a,655b) respectively fed by the first and second dispersive elements and generating a first and a second electrical signals, and a subtractor (605) for subtracting the first electrical signal from the second electrical signal.

6. The optical communication system of any one of the preceding claims, in which the dispersive element comprises one among an optical fiber section and a fiber Bragg grating.

7. The optical communication system of any one of the preceding claims, in which the optical communication link comprises at least one optical communication link section (165a,165b,...,165k), comprising a dispersion-compensated optical fiber span (170,175;170,175a,175b) and an optical amplifier (180).

8. The optical communication system of claim 7, in which said dispersion-compensated optical fiber span comprises one among a step-index optical fiber and non-zero dispersion-shifted optical fiber.

9. The optical communication system of claim 7, in which the dispersion-compensated optical fiber span comprises at least one dispersion-compensating element (175;175a,175b).

10. The optical communication system of claim 9, in which the dispersion-compensating element comprises one among a dispersion-compensating optical fiber, a transmission fiber and a fiber Bragg grating.

11. The optical communication system of any one of claims 7 to 10, in which the optical amplifier comprises one among an erbium-doped fiber amplifier, a semiconductor optical amplifier, an optical parametric amplifier and a Raman optical amplifier.

12. The optical communication system of any one of the preceding claims, in which:

the transmitter comprises at least two transmitter units (115a,115a,...,115k), each one generating a respective phase-modulated optical signal (Sa,Sb,...,Sk), the phase-modulated optical signals generated by different transmitter units being differentiated by wavelength, and a wavelength multiplexer (120) receiving the phase-modulated optical signals generated by different transmitter units and generating a wavelength division multiplexed optical signal S(Sa,Sb,...,Sk);
the receiver comprises a wavelength demultiplexer (125) receiving and demultiplexing the wavelength division multiplexed optical signal.

13. The optical communication system of claim 12, in which the dispersive element (550) is placed upstream the wavelength demultiplexer in the light propagation direction.

14. The optical communication system of claim 12, in which the receiver comprises at least two receiver units (130a, 130b,...,130k), each one comprising a respective dispersive element downstream the wavelength demultiplexer in the light propagation direction.

15. A method of optically transmitting information, comprising:

generating a phase-modulated optical carrier according to the information to be transmitted;
propagating the modulated optical carrier through an optical link;
receiving and demodulating the modulated optical carrier, **characterized in that**:

said propagating the modulated optical carrier comprises managing a dispersion of the optical link to keep almost constant the optical power of the phase-modulated optical carrier, and
said receiving and demodulating the modulated optical carrier comprises converting the phase-modulated optical carrier into a corresponding intensity-modulated optical carrier by subjecting the phase-modulated optical carrier to a prescribed dispersion, and demodulating the intensity-modulated optical carrier.


**Patentansprüche**

1. Optisches Kommunikationssystem, welches enthält:

einen Übertrager (100) zum Erzeugen eines phasenmodulierten optischen Signals (Sa, Sb,..., Sk);
einen Empfänger (105) zum Empfangen des phasenmodulierten optischen Signals;
eine optische Kommunikationsverbindung (110) zwischen der Übertrager-Sektion und der Empfänger-Sektion, **dadurch gekennzeichnet, dass**:

die optische Kommunikationsverbindung eine dispersionsgesteuerte optische Kommunikationsverbindung ist, welche dispersionskompensierende Elemente (175; 175a, 175b) enthält, welche das phasenmodulierte optische Signal auf einer im wesentlichen konstanten optischen Leistung verbreiten, und dass
der Empfänger ein dispersives Element (150; 550; 650a, 650b), welches eine vorgeschriebene Dispersion hat, wobei das dispersive Element das phasenmodulierte optische Signal empfängt und in ein entsprechendes intensitätsmoduliertes optisches Signal umwandelt, und einen optischen Intensitätserfasser (155;

655a, 655b) enthält, welchem das intensitätsmodulierte optische Signal zugeführt wird.

2. Optisches Kommunikationssystem nach Anspruch 1, bei welchem der Übertrager eine optische Trägerquelle (135), welche einen optischen Träger erzeugt, und einen Phasenmodulator (140), welcher durch ein Modulationssignal (Smod) angetrieben wird, um eine Phasenmodulation auf den optischen Träger zu vermitteln, enthält.

3. Optisches Kommunikationssystem nach Anspruch 2, bei welchem die optische Trägerquelle einen Laser enthält und der Phasenmodulator einen $LiNbO_3$ Modulator enthält.

4. Optisches Kommunikationssystem nach Anspruch 2 oder 3, bei welchem das Modulationssignal in einem Rückkehr-nach-Null Format kodiert ist.

5. Optisches Kommunikationssystem nach einem der vorhergehenden Ansprüche, bei welchem der Empfänger einen optischen Energie-Splitter (600), ein erstes und ein zweites dispersives Element (650a, 650b) mit einer gegenseitig entgegengesetzten Dispersions-Zuführung durch den Energie-Splitter, einen ersten und einen zweiten optischen Intensitäts-Erfasser (655a, 655b), welche jeweils durch das erste und zweite dispersive Element zugeführt werden und ein erstes und zweites elektrisches Signal erzeugen, und einen Subtrahierer (605) zum Subtrahieren des ersten elektrischen Signals vom zweiten elektrischen Signal enthält.

6. Optisches Kommunikationssystem nach einem der vorhergehenden Ansprüche, bei welchem das dispersive Element eines aus einer optischen Faser-Sektion und einem Faser-Bragg-Gitter enthält.

7. Optisches Kommunikationssystem nach einem der vorhergehenden Ansprüche, bei welchem die optische Kommunikationsverbindung zumindest eine optische Kommunikationsverbindungs-Sektion (165a, 165b,..., 165k) enthält, welche einen dispersionskompensierten optischen Faserbereich (170, 175; 170, 175a, 175b) und einen optischen Verstärker (180) enthält.

8. Optisches Kommunikationssystem nach Anspruch 7, bei welchem der dispersionskompensierte optische Faserbereich eines aus einer Stufenindex Optik-Faser und nicht-Null dispersionsverschobene Optik-Faser enthält.

9. Optisches Kommunikationssystem nach Anspruch 7, bei welchem der dispersionskompensierte optische Faserbereich zumindest ein dispersionskompensierendes Element (175; 175a, 175b) enthält.

10. Optisches Kommunikationssystem nach Anspruch 9, bei welchem das dispersionskompensierende Element eines aus einer dispersionskompensierenden optischen Faser, einer Übertragungsfaser und einem Faser-Bragg-Gitter enthält.

11. Optisches Kommunikationssystem nach einem der Ansprüche 7 bis 10, bei welchem der optische Verstärker eines aus einem Erbiumdotierten Faser-Verstärker, einem Halbleiteroptik-Verstärker, einem optischen parametrischen Verstärker und einem Raman-Optik-Verstärker enthält.

12. Optisches Kommunikationssystem nach einem der vorhergehenden Ansprüche, bei welchem:

der Übertrager zumindest zwei Übertragereinheiten (115a, 115b,..., 115k), wobei jede ein jeweiliges phasenmoduliertes optisches Signal (Sa, Sb,..., Sk) erzeugt, wobei die phasenmodulierten optischen Signale, welche durch unterschiedliche Übertragereinheiten erzeugt sind, durch ihre Wellenlänge differenziert sind, und einen Wellenlängen-Multiplexer (120), welcher die phasenmodulierten optischen Signale, welche durch unterschiedliche Übertragereinheiten erzeugt sind, empfängt und ein Wellenlängen-Multiplex-Optiksignal S(Sa, Sb,..., Sk) erzeugt, enthält;
der Empfänger einen Wellenlängen-Demultiplexer (125) enthält, welcher das Wellenlängen-Multiplex-Optiksignal empfängt und demultiplext.

13. Optisches Kommunikationssystem nach Anspruch 12, bei welchem das dispersive Element (550) in der Lichtausbreitungsrichtung stromaufwärts des Wellenlängen-Demultiplexers platziert ist.

14. Optisches Kommunikationssystem nach Anspruch 12, bei welchem der Empfänger zumindest zwei Empfängereinheiten (130a, 130b,..., 130k) enthält, wobei jede ein jeweiliges dispersives Element in der Lichtausbreitungsrichtung stromabwärts des Wellenlängen-Demultiplexers enthält.

**15.** Verfahren zur optischen Informationsübertragung, welches enthält:

Erzeugen eines phasenmodulierten optischen Trägers gemäß der zu übertragenden Information;
Verbreiten des modulierten optischen Trägers durch eine optische Verbindung;
Empfangen und Demodulieren des modulierten optischen Trägers, **dadurch gekennzeichnet, dass**:

das Verbreiten des modulierten optischen Trägers eine Steuerung von einer Dispersion der optischen Verbindung enthält, um die optische Leistung des phasenmodulierten optischen Trägers stets konstant beizubehalten, und
das Empfangen und Demodulieren des modulierten optischen Trägers ein Umwandeln des phasenmodulierten optischen Trägers in einen entsprechend intensitätsmodulierten optischen Träger, indem der phasenmodulierte optische Träger einer vorgeschriebenen Dispersion unterworfen wird, und Demodulieren des intensitätsmodulierten optischen Trägers enthalten.

**Revendications**

**1.** Système de communication optique comprenant :

un émetteur (100) pour générer un signal optique modulé en phase (Sa, Sb, ..., Sk);
un récepteur (105) pour recevoir le signal optique modulé en phase ;
une liaison de communication optique (110) entre la section d'émetteur et la section de récepteur, **caractérisé en ce que** :

la liaison de communication optique est une liaison de communication optique gérée par dispersion comprenant des éléments de compensation de dispersion (175; 175a, 175b), propageant le signal optique modulé en phase avec une puissance optique sensiblement constante, et **en ce que**
le récepteur comprend un élément dispersif (150; 550; 650a, 650b) ayant une dispersion prescrite, l'élément dispersif recevant et convertissant le signal optique modulé en phase en un signal optique correspondant modulé en intensité, et un détecteur d'intensité optique (155; 655a, 655b) alimenté par le signal optique modulé en intensité.

**2.** Système de communication optique selon la revendication 1, dans lequel l'émetteur comprend une source de porteuse optique (135) générant une porteuse optique, et un modulateur de phase (140) commandé par un signal de modulation (Smod), pour communiquer une modulation de phase à la porteuse optique.

**3.** Système de communication optique selon la revendication 2, dans lequel la source de porteuse optique comprend un laser et le modulateur de phase comprend un modulateur à $LiNbO_3$.

**4.** Système de communication optique selon la revendication 2 ou 3, dans lequel le signal de modulation est codé en un format avec retour à zéro.

**5.** Système de communication optique selon l'une quelconque des revendications précédentes, dans lequel le récepteur comprend un diviseur de puissance optique (600), un premier et un second élément dispersif (650a, 650b) avec des dispersions mutuellement opposées, alimentés par le séparateur de puissance, un premier et un second détecteur d'intensité optique (655a, 655b) respectivement alimentés par le premier et le second élément dispersif et générant un premier et un second signal électrique, et un soustracteur (605) pour soustraire le premier signal électrique du second signal électrique.

**6.** Système de communication optique selon l'une quelconque des revendications précédentes, dans lequel l'élément dispersif comprend un élément parmi une section de fibre optique et un réseau de Bragg sur fibre.

**7.** Système de communication optique selon l'une quelconque des revendications précédentes, dans lequel la liaison de communication optique comprend au moins une section de liaison de communication optique (165a, 165b, ..., 165k), comprenant une longueur de fibre optique compensée en dispersion (170, 175; 170, 175a, 175b) et un amplificateur optique (180).

**8.** Système de communication optique selon la revendication 7, dans lequel ladite longueur de fibre optique compensée en dispersion comprend un élément parmi une fibre optique à saut d'indice et une fibre optique à dispersion décalée non nulle.

9. Système de communication optique selon la revendication 7, dans lequel la longueur de fibre optique compensée en dispersion comprend au moins un élément de compensation de dispersion (175; 175a, 175b).

10. Système de communication optique selon la revendication 9, dans lequel l'élément de compensation de dispersion comprend un élément parmi une fibre optique de compensation de dispersion, une fibre de transmission et un réseau de Bragg sur fibre.

11. Système de communication optique selon l'une quelconque des revendications précédentes, dans lequel l'amplificateur optique comprend un élément parmi un amplificateur à fibres dopées à l'erbium, un amplificateur optique à semi-conducteur, un amplificateur optique paramétrique et un amplificateur optique Raman.

12. Système de communication optique selon l'une quelconque des revendications précédentes, dans lequel :

l'émetteur comprend au moins deux unités d'émetteur (115a, 115a, ..., 115k), générant chacune un signal optique respectif modulé en phase (Sa, Sb, ..., Sk), les signaux optiques modulés en phase générés par les différentes unités d'émetteur étant différenciés par la longueur d'onde, et un multiplexeur de longueur d'onde (120) recevant les signaux optiques modulés en phase générés par les différentes unités d'émetteur et générant un signal optique multiplexé par répartition de longueur d'onde S(Sa, Sb, ..., Sk) ;
le récepteur comprend un démultiplexeur de longueur d'onde (125) recevant et démultiplexant le signal optique multiplexé par répartition de longueur d'onde.

13. Système de communication optique selon la revendication 12, dans lequel l'élément dispersif (550) est disposé en amont du démultiplexeur de longueur d'onde dans le sens de la propagation de la lumière.

14. Système de communication optique selon la revendication 12, dans lequel le récepteur comprend au moins deux unités de récepteur (130a, 130b, ..., 130k), comprenant chacune un élément dispersif respectif en aval du démultiplexeur de longueur d'onde dans le sens de la propagation de la lumière.

15. Procédé de transmission optique d'informations, comprenant :

la génération d'une porteuse optique modulée en phase fonction de l'information à transmettre ;
la propagation de la porteuse optique modulée par l'intermédiaire d'une fibre optique ;
la réception et la démodulation de la porteuse optique modulée, **caractérisé en ce que** :

ladite propagation de la porteuse optique modulée comprend la gestion de la dispersion de la liaison optique pour maintenir pratiquement constante la puissance optique de la porteuse optique modulée en phase, et lesdites réception et démodulation de la porteuse optique modulée comprennent la conversion de la porteuse optique modulée en phase en une porteuse optique correspondante modulée en intensité en soumettant la porteuse optique modulée en phase à une dispersion prescrite et la démodulation de la porteuse optique modulée en intensité.

## FIG. 1

FIG. 2

FIG. 3

Comparison among different dispersion management strategies

ID - Nonlinear distortion index

A
B
C
D

Exact compensation
Combined DM
Undercompensation 2%
Undercompensation 4%

Length - km

FIG. 4

165a, 165b,...,165n

DISPERSION COMPENSATION
175a

170

DISPERSION COMPENSATION
175b

OA
180

FIG. 7

Sampling instant

Threshold level

5 a.u./div

25 ps/div

FIG. 5

FIG. 6

**FIG. 8**

**FIG. 9**

## FIG. 10

## FIG. 11

FIG. 12

FIG. 13